# EUROPEAN PATENT APPLICATION

(11) **EP 0 809 961 A1**
(43) Date of publication of application: **03.12.1997**
(21) Application number: 96303837.7
(22) Date of filing: 29.05.1996
(51) Int. Cl.: A47J 41/00

(54) **Thermally insulated bottles and the like**

(71) Applicant: PEACOCK CO., LTD., Osaka (JP)
(72) Inventor: Takagawa, Nobuyuki, Tsuzuki-gun, Kyoto (JP)
(74) Representative: Warren, Anthony Robert

(57) **Abstract**

The invention relates to a thermally insulating bottle or flask (1) for keeping beverages in a hot or cold state. The flask comprises an inner container (3) mounted within an outer container (2). A plug member (5) is fitted into an upward opening (4) of the outer container. The plug member is formed with a filling passage (19) via which the beverage may be poured from outside the flask, directly into the inner container (3). Thus, the flask can be filled without having to remove the plug member (5), with the plug member (5) screwed to the outer container (2), so that the filling operation is greatly simplified.

## Description

The present invention relates to a thermally insulated bottle or flask, such as a vacuum or thermos bottle or flask for keeping, for example, coffee, tea, Japanese tea or other beverages, in a hot or cold state.

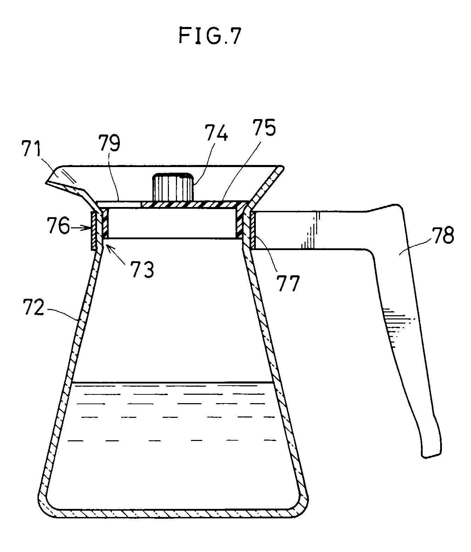

Hitherto, a container has been proposed for keeping coffee which has been prepared by a coffee machine, as an example of one of the above beverages. Such a container, comprising a serving pot, is shown in Fig. 7 of the accompanying drawings.

The pot shown in Fig. 7 has a pot body 72 having a pouring or dispensing port or spout 71 to one side of its upper end. A lid 75, having a knob 74, is detachably fitted to an upward opening 73.

In order to transfer the coffee from the coffee machine into the pot body 72, the lid 75 is removed, the coffee is poured into the pot body 72 through the opened upward opening 73, and the lid 75 is then replaced. When required, the coffee contained in the pot body is poured out through a comb-shaped opening 79 in the lid 75. Since filling the pot with the beverage requires removal and replacement of the lid 75, the ease of operation is extremely poor. This problem is not limited to the serving pot shown in Fig. 7; similar problems occur with conventional thermos bottles or flasks.

It is a primary object of the invention to provide a thermally insulated container or vessel, for example a vacuum or thermos bottle or flask, which includes an outer container, an inner container mounted within the outer container, and a closure member such as a plug member releasably attached to the outer container, the flask being capable of being filled by pouring a beverage directly into the inner container, without having to detach the plug member. This is achieved by forming a filling or inlet passage in the plug member which allows the beverage to be poured directly into the inner container, thereby significantly enhancing the ease of a filling operation.

It is an optional object of the invention to provide such a flask or bottle which is capable of efficiently preventing the beverage from spilling from the previously mentioned filling passage when pouring in the beverage, and of assuring smooth discharge of the beverage when pouring it out. This is achieved by forming a temporary beverage-receiving concavity or recess above the filling passage in the plug member, and arranging a discharge part of the plug member and a pouring or dispensing part of the outer container opposite to each other when fixing the plug member.

It is a further optional object of the invention to provide such a flask or bottle which is capable of normally preventing or reducing the escape of steam, heat or cold from the beverage in the flask, for example when the flask is upright, whilst allowing the beverage to be efficiently poured out when serving. This is achieved by installing a movable inner lid in or on a lower part of the plug member, which normally closes an upward opening of the outer container, but which is displaced by the beverage, when pouring out the beverage, to permit communication between the upward opening and the dispensing or pouring part.

It is a further optional object of the invention to provide such a flask or bottle which is capable of securely preventing back flow (outflow) of the beverage through the filling passage of the plug member, if the flask is inclined by a relatively large angle when pouring out the contained beverage. This is achieved by providing the filling passage of the plug member with a passage member having an opening directed away from the pouring or dispensing part.

In order that the invention may be more readily understood, reference will now be made to the accompanying drawings, in which:-
Fig. 1 is a side view showing a thermos flask embodying the invention;
Fig. 2 is a vertical section through the thermos flask of Fig. 1;
Fig. 3 is a magnified view, partially in section, of the plug member of the thermos flask shown in Figs. 1 and 2;
Fig. 4 is a perspective view of the movable inner lid and passage member of the thermos flask shown in Fig. 2;
Fig. 5 is a section, similar to Fig. 2, in which the flask is conditioned so that a beverage may be poured into the flask;
Fig. 6 is a similar section, in which the flask is conditioned so that the beverage may be poured out from the flask; and
Fig. 7 is a sectional view showing a conventional serving pot.

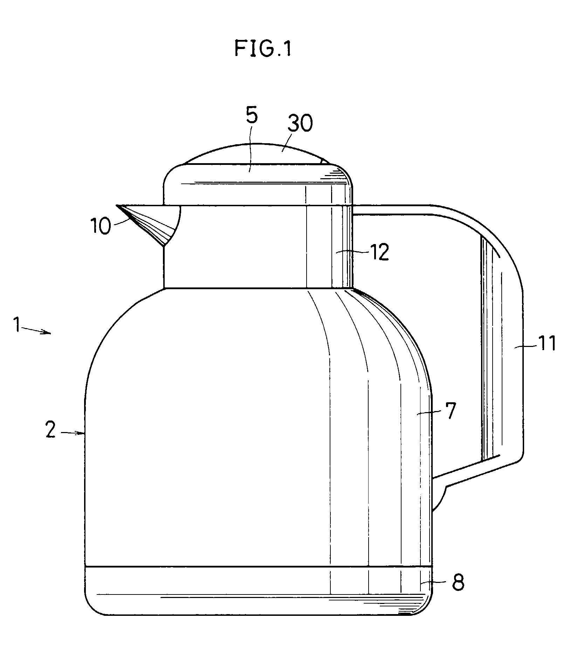

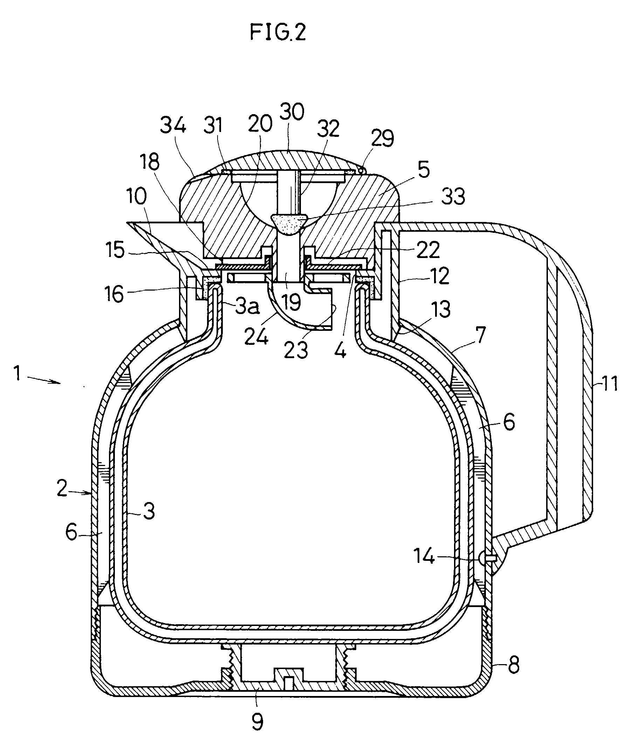

Fig. 1 and Fig. 2 show a vacuum or thermos flask 1 which comprises an outer container 2 made of synthetic resin, and an inner container 3 which is a glass double-walled structure for keeping the contents hot or cold, disposed inside the outer container 2. A plug member 5 made of synthetic resin is detachably screwed into an upward opening 4 in the outer container 2, and more specifically into the threaded part or neck of the outer container above the vicinity of the opening 4.

The outer container 2 is divided or split, and formed into a main body 7 having plural ribs 6 for holding the inner container 3 therein, and three members. These members comprise a bottom closure 8 screwed and fixed in a downward opening in the main body 7, an adjuster member 9 screwed into the center of the bottom closure 8 for holding the inner container 3, and an upper member 12 formed integrally with a dispensing spout or pouring port 10 at one side and a handle 11 at the other side. Hence, forming is facilitated and, moreover, an annular stop member 13 forming part of the upper member 12 is press-fitted into an upper opening bounded by an upper edge of the main body 7, and the lower part of the handle 11 and main body 7 are fixed together by fitting means such as a rivet or screw 17.

Between an opening 3a at the upper end or neck of the inner container 3 and the underside of a flange 15 around the periphery of the upward opening 4 of the outer container 2, a ring-shaped seal member 16 is interposed, thereby providing a seal between the inner and outer containers in the vicinity of the openings 3a and 4. The upper opening 3a is designed to coincide with the upward opening 4 of the outer container 2 in the vertical direction.

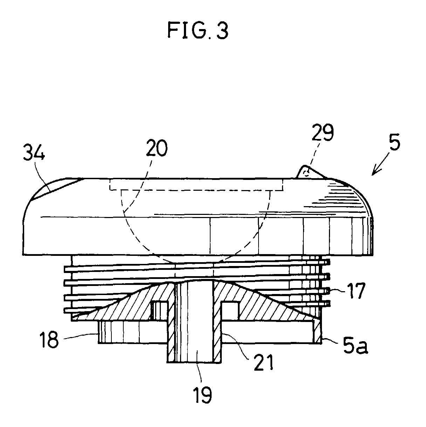

The plug member 5 has a threaded part 17 formed integrally with its outer circumference as shown in Fig. 3, and is detachably screwed into a threaded protrusion (not shown) formed at least partially around the corresponding part of the upper member 12 in the outer container 2. The plug member is formed with a depending skirt 5a which is interrupted by an opening which forms a discharge port or part 18. When the plug member 5 is screwed in place as shown in Fig. 2, a discharge part 18 of the plug member 5 and the spout 10 of the outer container 2 are aligned with each other.

The plug member 5 is also formed with a feed or filling passage 19 through which coffee or other beverage may be poured from the outside, directly into the inner container 3. A hemispherical recess 20 or other concavity for temporarily retaining the beverage is formed in the top of the plug member, which communicates with the upper end of the filling passage 19.

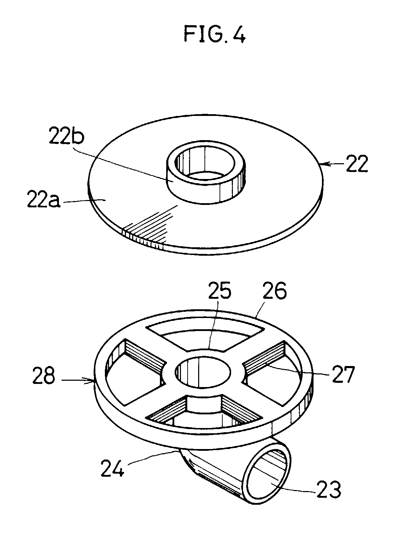

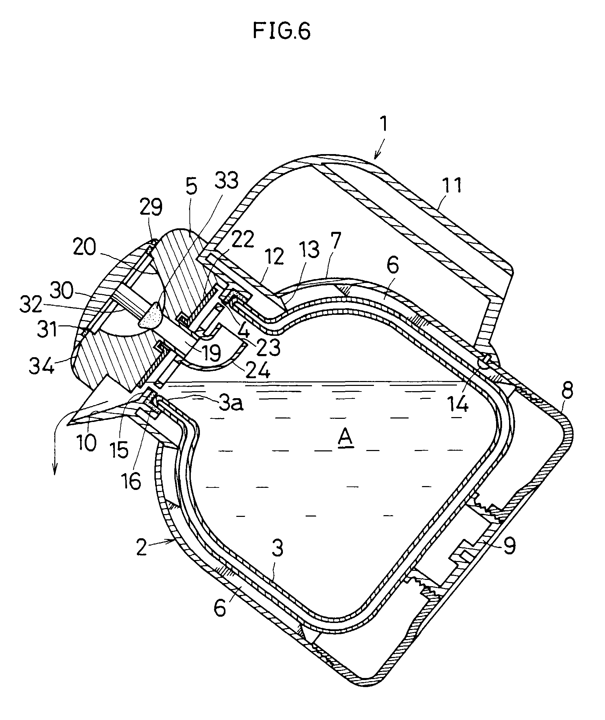

As shown in Fig. 3, the plug member includes a depending cylindrical part or boss 21 which defines the lower end of the feed passage 19. Mounted on this boss 21 is a disk-shaped inner lid 22 (see Fig. 4) which is displaceable to open and close the upward opening 4 of the outer container 2. When the flask is upright, this inner lid 22 normally slides down under its own weight, due to gravity (see Fig. 2), closing the opening 4. When the flask is tilted, as shown in Fig. 6, the inner lid 22 is pushed up by the beverage, providing communication between the upward opening 4 and the spout 10 and allowing the beverage to be poured out of the flask.

This movable inner lid 22 has a flange 22a and a tubular hub 22b as shown in Fig. 4. By fitting the tubular hub 22b on the outer circumference of the cylindrical boss 21, the inner lid 22 is able to move smoothly up and down on the boss 21 to act as a valve member.

Fixed to the lower end of the cylindrical boss 21, as shown in Fig. 2, is a passage member 24 bent or formed to an L-shape, so that its opening 23 may be directed away from the spout 10. The passage member 24 serves to prevent the movable inner lid 22 from becoming detached, and the inside of the passage member 24 communicates with the feeding passage 19. In this embodiment, as shown in Fig. 4, the upper end of the passage member 24 is provided with a flange body 28 having radially extending cross spokes 27 which are integrally formed between inner and outer rings 25, 26. However, this flange body 28 is not an essential component, and may be omitted.

An upper lid 30, made of a synthetic resin, is located above the plug member 5, and is pivotably connected thereto by a support shaft or fulcrum 29 so as to be free to open and close. At the lower side of the upper lid 30 is affixed a ring-shaped seal member 31 which is designed to seal between the upper side of the plug member 5 and the lower side of the upper lid 30. A seal member 33 is fitted to the lower end of a protrusion 32 projecting from the middle of the lower side of the upper lid 30, which seal member 33, when the upper lid 30 is closed, closes the upper end of the filling passage 19. Between the upper lid 30 and plug member 5, convex and concave engaging parts (not shown) are formed for releasably engaging both parts 5, 30 by making use of the resilience of the resin. The plug member 5 is formed with a recess 34 opposite the shaft 29 to permit the upper lid 30 to be manipulated. The opening and closing arrangement of the upper lid 30, which uses the support shaft 29, may be replaced by alternative arrangements; for example the parts 5, 30 may be hingedly interconnected with a thin resin piece or web, and the fulcrum of the upper lid 30 may be formed adjacent the spout 10, instead of diametrically opposite the spout.

The embodiment of flask previously described operates as described below.

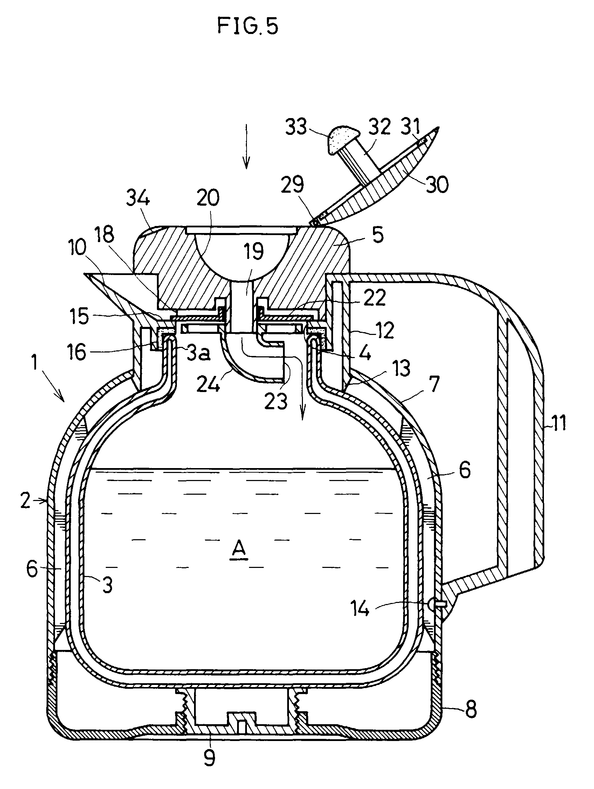

When a beverage A such as coffee from a coffee machine, is to be poured into the flask 1, the closed upper lid 30 as shown in Fig. 2 is first opened as shown in Fig. 5, exposing the upper end of the filling passage 19 through the plug member 5. Therefore, it is not necessary to detach the plug member 5 as in the prior art, and the beverage A can be poured directly into the inner container 3 from outside through the elements 20, 19, 24, 23, with the plug member 5 still attached to the outer container 2. As a result, the ease of the filling operation is greatly enhanced.

In addition, due to the provision of the concave part or recess 20 for temporarily retaining the beverage, formed above the feeding passage 19, overflow of the beverage A from above the feeding passage 19 when pouring in the beverage can be efficiently prevented. When the plug member 5 is completely fixed, i.e. fully screwed in, the discharge opening or part 18 of the plug member 5 is aligned with the spout 10 of the outer container 10 or with the passage leading to the spout, allowing the beverage to be discharged smoothly when it is being poured out.

Moreover, the movable inner lid 22 closes the upward opening 4 of the outer container 2 when the flask is upright, and until the inner lid is displaced by the beverage, as shown in Fig. 5. Thus, the inner lid 22 is normally effective to prevent the escape of steam, heat or coldness to outside (including aroma and flavour) from the beverage A contained in the flask. However, when pouring out the beverage (see Fig. 6), the movable inner lid 22 is displaced by the beverage A, permitting communication between the upward opening 4 and spout 10, so that the beverage can be poured out.

Furthermore, since the opening 23 in the passage member 24 is directed to the side of the flask opposite the spout 10, when pouring out the beverage A, if the flask 1 is inclined by a relatively large angle as shown in Fig. 6 by holding the handling 11, this passage member 24 is effective to prevent counterflow (outflow) of the beverage A in the flask via the filling passage 19 in the plug member 5.

When pouring out the beverage, since the upper end of the feeding passage 19, and the peripheral edge of the recess 20 are respectively sealed by the two seal members 33, 31 of the closed upper lid 30, if the flask 1 is inclined as shown in Fig. 6, counterflow of the internal beverage A can be even more securely prevented by this double seal arrangement. In addition, this double seal arrangement is also effective to prevent the steam or heat or coldness (including aroma and flavour) from the beverage in the flask 1 from escaping to the exterior when upright, as well as to prevent counterflow when pouring out the beverage.

Various modifications may be made without departing from the scope of the invention as defined in the appended claims. For example, the material, such as synthetic plastics material or materials, and design of the elements illustrated in the embodiment are only given by way of example, and are not to be construed as limitative. In order to prevent the movable inner lid 22 from becoming detached, a locking pin may be provided in the cylindrical part 21. The beverage to be kept hot or cold in the flask 1, instead of being coffee as in the illustrated embodiment, may be other beverages such as tea, Japanese tea, or alcoholic drinks such as hot whiskey, or other liquids.

## Claims

1. A thermally insulated flask (1) having an inner container (3) inside an outer container (2), and a plug member (5) for fitting to an upward opening (4) in the outer container (2), characterised by a filling passage (19) formed in the plug member (5) to allow a beverage to be fed from outside the flask (1) directly into the inner container (3).

2. A flask as claimed in claim 1, wherein a concavity (20) for temporarily retaining a beverage is formed above and communicating with the filling passage (19) in the plug member (5).

3. A flask as claimed in claim 1 or 2, wherein the plug member (5) is provided with a discharge part (18), and the outer container (2) is provided with a pouring part (10), the discharge part (18) and the pouring part (10) being arranged to confront each other when the plug member is fitted to the upward opening (4).

4. A flask as claimed in claim 1, 2 or 3, wherein the lower part of the plug member (5) is provided with a movable inner lid (22) which is displaceable from a position in which it closes the upward opening (4) of the outer container when the flask is not in a pouring position, to a position in which it permits communication between the upward opening (4) and pouring part (10), said displacement of the inner lid (23) being effected by the beverage when poured out of the flask.

5. A flask as claimed in any preceding claim, wherein the inner end of the filling passage (19) in the plug member (5) communicates with a passage member (24) having an opening (23) directed away from the pouring part (10).
